# EUROPÄISCHE PATENTANMELDUNG

(11) **EP 2 229 826 A1**
(43) Veröffentlichungstag der Anmeldung: **22.09.2010**
(21) Anmeldenummer: 09002758.2
(22) Anmeldetag: 26.02.2009
(51) Int. Cl.: A24B 15/16, A23G 3/50, A23G 3/56, A24F 47/00

(54) **Genuß, Rauchzigarette ohne Nikotin/Tabak/Kraut (G+R-Zigarette)**

(71) Anmelder: Wellhausen, Leonie, 63477 Maintal (DE)
(72) Erfinder: Wellhausen, Leonie, 63477 Maintal (DE)

(57) **Zusammenfassung**

Um den schwerfallenden Tabak - Verzicht zu erleichtern, wird das gesundheitsunschädliche Rauchen mit dem Genuss von Süßigkeiten (Genussteil, Zeichnung 5) verbunden.

Die G + R- Zigarette besteht aus einer zum Abbeißen mehrmals markierten Süß waren - Stange (Z. 2.1 + 3.1), essbarer Hülle (Z. 2 + 3) und dem am mundstückfernen Ende angeklebten, 16 mm messenden Rauchteil (Z. 6) zum Anzünden und dezent duftenden Verrauchen.

Der Rauchstrom kann dank der doppelten, feuerfesten Papiertrennlage zum Blindteil (Z. 1), der mit einer feuerfesten Banderole (Z. 4) verstärkt ist, ohne eine Luftröhren - Inhalation des Rauchers, sondern nur als ein durch die Raumluft verdünnter Rauchstrom ohne Suchtpotential und ohne eine auch nur annähernde Gesundheitsgefahr (das Gleiche gilt für anwesende Passiv- Raucher) eingeatmet werden.

## Beschreibung

Die Erfindung der
Genuss + Rat_{!}ch-Zigarette ohne Nikotin/Tabak/Kraut (Abk. G + R-Zigarette) stellt eine technische Neuentwicklung/Konstruktionsverbesserung ähnlicher Süßwaren-Rauchteil-Zigaretten dar, in die aber
1. ein Blindteil, Zeichnung (1) zum hitzeschadenvermeidenden Ausdrücken des glühenden Ascherestes vom Rauchteil integriert ist, - bei der aber
2. eine verbesserte essbare Zigarettenhülle, Z. (2) aus einer dünnen, weißen, geschmeidigen Fondantschicht verwendet wird, in welche eine
3. zylindrische kompakte Lakritz- oder Fruchtgummi-Stange (2.1) oder eine Fondant-Stange (3.1) mit Pfefferminz-Geschmack gefüllt wird, die mit einer Lebensmittel- Lackschicht (3) vor der Gefahr des Aneinanderklebens geschützt wird.
   Die weitere zusätzliche Ausgestaltung besteht aus einer
4. feuerfesten, weißen Papierbanderole (4), die über dem Blindteil, z. T. den Genuss-(5) und z. T. den Rauchteil (6) überlappend, klebt und Schutz und Rückhalt beim Ausdrücken des Ascherestes im Aschenbecher bietet.

Die unbedingt erforderlichen Verbesserungen gegenüber ähnlicher Süßwaren-Rauchteil-Zigaretten haben zu der o. a. Neuentwicklung geführt und werden dazu beitragen, dass ein Umsteigen und Entwöhnen vom gesundheitsschädlichen Tabakrauchen und ein angenehmer Mahlzeit-Abschluss oder eine Zwischendurch-Beruhigung von Nerven und Sinnen durch das gemütliche, warme Rauchzeremoniell möglich ist.

Abmessungen (äußerlich mit Normalzigaretten identisch):
Genussteil 60 mm - Blindteil 8 mm - Rauchteil 16 mm
= 84 mm Gesamtlänge -Außendurchmesser zylindrisch 8 mm
feuerfeste Banderole 16 mm = 5 mm + 3 mm den Blindteil überlappend

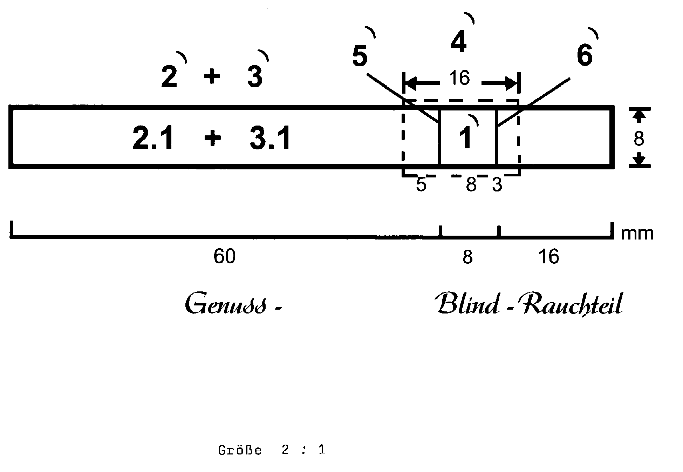

## Patentansprüche

1. Genuss + Rauchzigarette ohne Nikotin/Tabak/Kraut
**dadurch gekennzeichnet, dass**

2. ein anzündbarer, aber nicht zu inhalierender Rauchteil (6) integriert ist (nach einem Geheimrezept hergestellt), welcher mit Honig-Tabak- oder mit Apfel- oder Menthol-Aroma o. ä. angereichert ist, ferner nach Anspruch 1
**dadurch gekennzeichnet, dass**

3. diese mundstückseitig aus einem Genuss- = Süßwarenteil (5) zum Verzehr (als drei Stücke markiert) besteht, und zwar nach Anspruch 3 wahlweise:

4. aus einer Lakritz- oder Fruchtgummi-Stange (2.1) mit

5. essbarer, weißer Fondant-Hülle (2) oder

6. aus einer Pfefferminz-Fondant-Stange (3.1) mit

7. Lebensmittel-Lacküberzug (3) zur Vermeidung des Aneinanderklebens,
ferner nach Anspruch 1 **dadurch gekennzeichnet, dass** diese durch

8. einen Blindteil (1) aus Filterpapier mit zwei feuerfesten Trennlagen zum Rauchteil hin als Zwischenglied zum hitzeschadenvermeidenden Ausdrücken des glühenden Rauchreils seine praktische Gebrauchsfähigkeit erhält,
ferner nach Anspruch 1 **dadurch gekennzeichnet, dass** diese

9. mit einer weißen, klebenden, feuerfesten Papierbanderole (4) ausgestattet ist, die über dem Blindteil, z. T. den Genuss- und z. T. den Rauchteil überlappend, angebracht ist und
weiteren Schutz und Rückhalt beim Ausdrücken bietet.
Ferner nach Anspruch 1 **dadurch gekennzeichnet, dass** diese

10. insgesamt sowohl äußerlich als auch in der Rauchdauer identisch ist mit Normalzigaretten
aber der eigenen Gesundheit und der Gesundheit der Mitmenschen nicht schadet wie Normalzigaretten.
